# EUROPÄISCHE PATENTSCHRIFT

(11) **EP 1 440 945 B1**
(45) Veröffentlichungstag und Bekanntmachung des Hinweises auf die Patenterteilung: **14.05.2008**
(21) Anmeldenummer: 03466021.7
(22) Anmeldetag: 18.12.2003
(51) Int. Cl.: C03B 9/41, C03B 9/193

(54) **Servomechanismus zum Antrieb vom Pressstempel einer Glasformmaschine**
Servomechanism to drive the plunger of a glass forming machine
Servo-méchanisme pour l'entrainement du poinçon-ébaucheur d'une machine à façonner le verre

(30) Priorität: 24.01.2003 CZ 20030235
(43) Veröffentlichungstag der Anmeldung: 28.07.2004
(73) Patentinhaber: Markus Trading, s.r.o., 460 15 Liberec (CZ)
(72) Erfinder: Roucek, Ervin, 460 15 Liberec 15 (CZ); Vlcek, Jan, 511 01 Turnov (CZ)
(74) Vertreter: Calek, Karel

(56) Entgegenhaltungen:
- EP-A- 0 789 004
- EP-A- 0 896 956
- EP-A- 1 243 566
- WO-A-98/09921
- DE-A1- 10 106 059

## Beschreibung

Die Erfindung betrifft ein Gebiet der Herstellung von Glaskörpern auf den Glasformmaschinen, wo die diese Glaskörper bildenden Glaserzeugnisse durch ein so genanntes Pressblasen auf den Glasformmaschinen mit den selbstständigen Stationen hergestellt werden, wo zuerst ein Külbel in einer Station in der Vorform mit dem Pressstempel in ein Halberzeugnis, in einen so genannten Vorpreßling gepresst wird, welches weiter nach einer Seitenwendung in einer Endform in eine Endgestalt geblasen wird. Die Erfindung betrifft insbesondere einen Servomechanismus zum Antrieb von solchem Pressstempel einer Glasformmaschine und sie kann auch bei einem Mechanismus für Abnehmer, Wendeeinrichtung, Schließkopf und Blaskopf, Fülltrichter und Servomechanismus des Pressstempels eines Feeders angewandt werden.

Im bekannten Stand der Technik wird das Külbel in einem formbaren Zustand vom oben in den Formholraum der Vorform geführt. Nachstehend wird es mittels eines Pressmechanismus in den Formholraum zur Bildung eines Glashalberzeugnisses, eines so genannten Vorpreßlinges gepresst, wobei die Form der inneren Oberfläche des Vorpreßlinges durch die Form der äußeren Oberfläche des Kopfes des Pressstempels und die Form der äußeren Oberfläche des Vorpreßlinges durch die innere Form der Vorform bestimmt ist. Ein so geformter Vorpreßling wird aus der Vorform oder aus den Vorformen herausgenommen und in die Endform oder in einige Endformen zur weiteren Verarbeitung übertragen.

Der das Arbeitsglied in der Glasformmaschine für Glaskörper bildende Pressstempel wird bei der Formung des Vorpreßlinges in seiner Achse zwischen der herausgezogenen und der gründlichen Lage verschoben, und zwar in die Richtung heraus der Vorform und herein die Vorform. Der Pressstempel ist gewöhnlich vertikal angeordnet und die angeführte Verschiebung führt in seiner vertikalen Achse durch, wo der Pressstempel aus seiner unteren herausgezogenen Lage in seine obere Arbeitslage verschoben wird. In einer Station werden gewöhnlich ein bis vier Vorpreßlinge hergestellt und zwar mit einem oder vier Pressstempeln, die parallel neben einander angeordnet sind.

Der Pressstempel wird in seiner vertikalen Achse mittels verschiedener Bewegungsmechanismen verschoben. Diese Mechanismen, die eine verschiebbare Bewegung sichern, können durch ein herkömmliches Pressmedium, wie die Pressluft oder hydraulische Flüssigkeit, getrieben. Die angeführten Mechanismen sind zwar relativ einfach und ausprobiert, aber sie weisen eine Reihe von Nachteilen aus, wo insbesondere ein Problem einer genauen Steuerung der Größe des Arbeitsdruckes in der Abhängigkeit von den wechselnden Eigenschaften der Glasmasse während des Pressverfahren. Deshalb müssen diese Mechanismen durch relativ komplizierte Einrichtung zur Verfolgung und zum Abfühlen der Betriebsparameter wie zum Beispiel Druck und Geschwindigkeit ergänzt werden, und damit gekoppelte Regulationseinrichtung, die Betriebsparameter in der Abhängigkeit von den abgefühlten Daten reguliert.

Bessere Ergebnisse bringt ein Mechanismus zur Verschiebung des Pressstempels in der vertikalen Achse, welcher durch einen elektrischen Motor, insbesondere durch einen elektrischen Servomotor getrieben wird. Eine rotierende Bewegung des elektrischen Motors wird an eine mechanische Verbindung der Führungsschraube und der Führungsmutter übertragen, welche die rotierende Bewegung an die Schiebebewegung zur Verschiebung des Pressstempels in der vertikalen Achse übertragen. Die Einheit des Pressstempels wendet die rotierende Bewegung an eine lineare Bewegung mittels einer Schraube mit dem involventen Schraubengewinde, welche eine "umgekehrte Führungsschraube" genannt ist. Diese Lösung ist zum Beispiel in der veröffentlichte Patentanmeldung CZ-PV 1997-133 und in der analogischen Patentanmeldung EP 0 789 004.

Zur Reduzierung der Reibung zwischen den Gewinden der Schraube und der Mutter sind diese Teile offen als eine Kugelführungsschraube und eine Führungsmutter gebildet, wo eine gleitende Reibung ist durch eine rollende Reibung wesentlich reduziert, mittels der Kugeln, die in einem geschlossenen Kreis zwischen den Gewinden der Führungsschraube und der Führungsmutter angebracht sind. Eine solche Lösung ist zum Beispiel in der Schrift WO 98/09921 angeführt, welche eine andere Einrichtung der Glasformmaschine betrifft. Das ist eine Servo- Wendeeinrichtung, welche aus einem Stützarmen des Vorpreßlinges, aus einem Zahnrad und einer Zahnstange gebildet ist. Eine reversible Bewegung der Zahnstange ist mittels einer Schraubenspindel mit den zirkulierenden Kugeln und einer Führungsmutter durch einen elektrischen Motor betätigt. Es entsteht hier ein Problem, und zwar die Abdichtung des Motors und des Getriebes Schraube/Mutter gegen die Verunreinigung. Deshalb ist es hier ein Schutz für die Abdichtung des Motors beanspruchen, welcher mit den unteren und oberen luftdichten Mitteln so vorgesehen ist, dass die unteren luftdichten Mittel sichern, dass die Schraubenspindel mit den zirkulierenden Kugeln in einem Bad des Schmieröls ist, während die oberen luftdichten Mittel sichern,dass die Schraubenspindel und die Führungsmutter und das Schmieröl vor den verunreinigenden Stoffen geschützt sind, welche durch die Kühlungsluft getragen sind, die in der äußeren Umgebung zirkuliert, in welchem jede selbstständige Station arbeitet.

Der Erfindung liegt die Aufgabe zugrunde, die angeführten Nachteile zu beseitigen, bei einer gleichzeitigen Ausnutzung der aus dem Stand der Technik bekannten vorteilhaften Konstruktionselemente. Es wurde deshalb vorgeschlagen, die ausprobierte Lösung anzuwenden, wo die rotierende Bewegung des elektrischen Motors an die mechanische Verbindung der Führungsschraube und der Führungsmutter zu übertragen, welche die rotierende Bewegung an die lineare Bewegung zur einen Verschiebung des Pressstempels in der vertikalen Achse überführt. Für die Reduzierung der Reibung zwischen den Gewinden der Führungsschraube und der Führungsmutter sind diese Teile als eine Kugelführungsschraube und Führungsmutter gebildet, wo die gleitende Reibung durch eine rollende Reibung wesentlich reduziert ist, mittels der Kugeln, die in einem geschlossenen Kreis zwischen den Gewinden der Führungsschraube und der Führungsmutter angebracht sind. Es wurde vorgeschlagen, ein Getriebe mittels einer drehbaren - nicht verschiebbaren Kugelschraube und einer nicht drehbaren - verschiebbaren Kugelmutter anzuwenden. Es entstehen aber dabei weitere Probleme, und zwar die Eindringung der Verunreinigungen ins Getriebe der Kugelschraube und der Kugelmutter zu verhindern und eine Reaktion der Mutter, d.h. eine Verhinderung ihrer Rotation bei ihrer linearen Verschiebung in der Achse des Pressstempels aufzufangen.

Die angeführten Nachteile sind aus einem größeren Teil beseitigt und die angeführte Aufgabe ist mittels eines Servomechanismus zum Antrieb vom Pressstempel einer Glasformmaschine gelöst, bestehend aus einem elektrischen Motor, einer Führungsschraube und einer Führungsmutter und in einem gemeinsamen Rahmen angebracht, wo die rotierende Bewegung des elektrischen Motors an die mechanische Verbindung der Führungsschraube und der Führungsmutter übertragen ist, welche die rotierende Bewegung an die lineare Bewegung zur Verschiebung des Pressstempels in seiner vertikalen Achse überführt, wobei für die Reduzierung der Reibung zwischen den Gewinden der Führungsschraube und der Führungsmutter diese Teile als eine Kugelführungsschraube und als eine Kugelführungsmutter gebildet sind, wobei die Kugelführungsschraube drehbar und nicht verschiebbar ist und die Kugelführungsmutter verschiebbar und nicht drehbar ist, wobei die Kugelführungsmutter mit dem verschiebbaren Pressstempel fest verbunden ist, mit welchem sie koaxial angeordnet ist, nach der Erfindung, dadurch gekennzeichnet dass die rotierende Bewegung des elektrischen Motors an die in der Kugelführungsmutter gelagerte Kugelführungsschraube übertragen ist, wobei die Kugelführungsmutter mit dem verschiebbaren Pressstempel mittels eines verschiebbaren Schutzdeckels fest verbunden ist, welcher herum ein Getriebe der Kugelführungsschraube und der Kugelführungsmutter in einer ganzen Hublänge der Kugelführungsmutter angeordnet ist, wobei der Schutzdeckel mit einer Möglichkeit einer gemeinsamen Verschiebung mit der Kugelführungsmutter fest verbunden ist, wobei in einem gemeinsamen Rahmen parallel mit der Achse des Pressstempels eine Stangenführung zum Auffangen der Reaktion der Kugelführungsmutter gegen die Rotation.

Nach einer vorteilhaften Durchführung der Erfindung ist zwischen dem elektrischen Motor und der Kugelführungsschraube ein eingelegtes Zahngetriebe angeordnet, bestehend aus einem Kleinrad des elektrischen Motors und aus einem mit der Kugelführungsschraube fest verbundenen angetriebenen Zahnrad, für eine Erhöhung des Drehmoments des elektrischen Motors und für eine Erhöhung der Presskraft.

Nach einer weiteren vorteilhaften Durchführung der Erfindung ist der verschiebbare Schutzdeckel, welcher gleichzeitig einen Träger des verschiebbaren Pressstempels bildet, aus einer Hohlwelle gefertigt, wobei der verschiebbare Schutzdeckel an einem seinen Ende in die Richtung zum gemeinsamen Rahmen mit der verschiebbaren Kugelführungsmutter fest verbunden ist, die darin gelagert ist, und an dem anderen Ende ist der verschiebbare Schutzdeckel mit dem verschiebbaren Pressstempel fest verbunden.

Nach einer weiteren vorteilhaften Durchführung der Erfindung ist die verschiebbare Kugelführungsmutter weiter mit einem Ende des Führungsarmes fest verbunden, welcher mit seinem anderen Ende auf einer Stabführung verschiebbar gelagert ist, welche parallel mit der Achse des verschiebbaren Pressstempels zum Auffangen der Reaktion der Kugelführungsmutter gegen die Drehung angeordnet ist.

Durch diese Konstruktionsanordnung sind so die angeführten Nachteile beseitigt und die angeführte Aufgabe ist gelöst, unter der gleichzeitigen Ausnutzung der vorteilhaften Konstruktionselemente bekannten aus dem Stand der Technik.

Ein bevorzugtes Ausführungsbeispiel der Erfindung ist in der Zeichnung dargestellt. Es zeigen:
**Fig. 1** eine Draufsicht auf den angeführten Servomechanismus in der Ausführung für einen Antrieb von zwei parallel nebeneinander angeordneten Pressstempeln,
**Fig. 2** einen Schnitt durch den Servomechanismus gemäß Schnittlinie A - A von Fig. 1, geführten durch die Achse eines verschiebbaren Pressstempels und gleichzeitig durch die Stabführung zum Auffangen der Reaktion der Kugelführungsmutter und
**Fig. 3** eine schematische Darstellung der Anordnung nach der Fig. 2, mit einer Bezeichnung der Hauptteile.

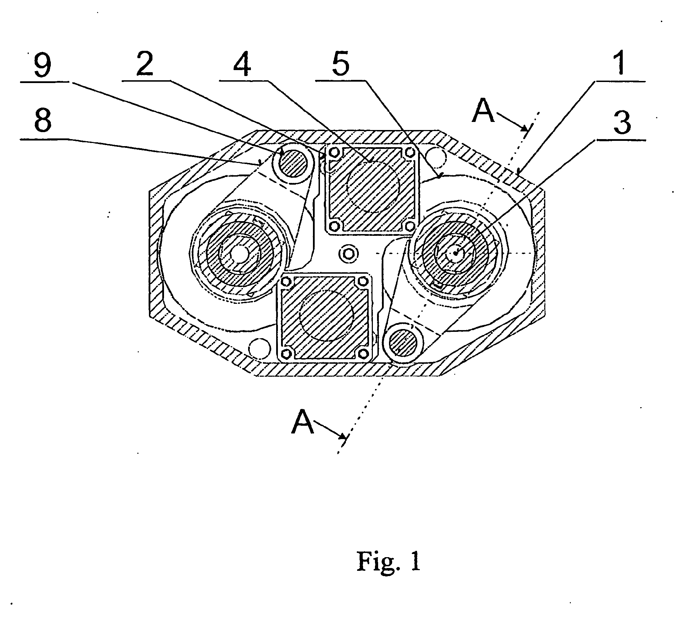

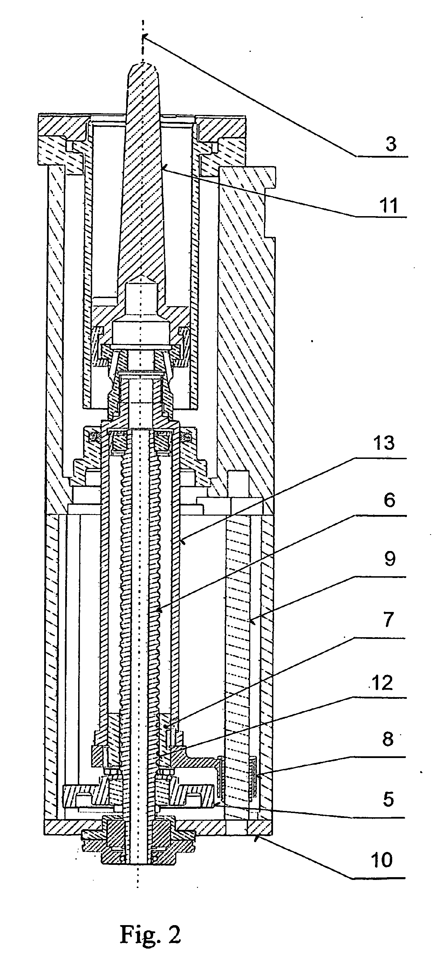

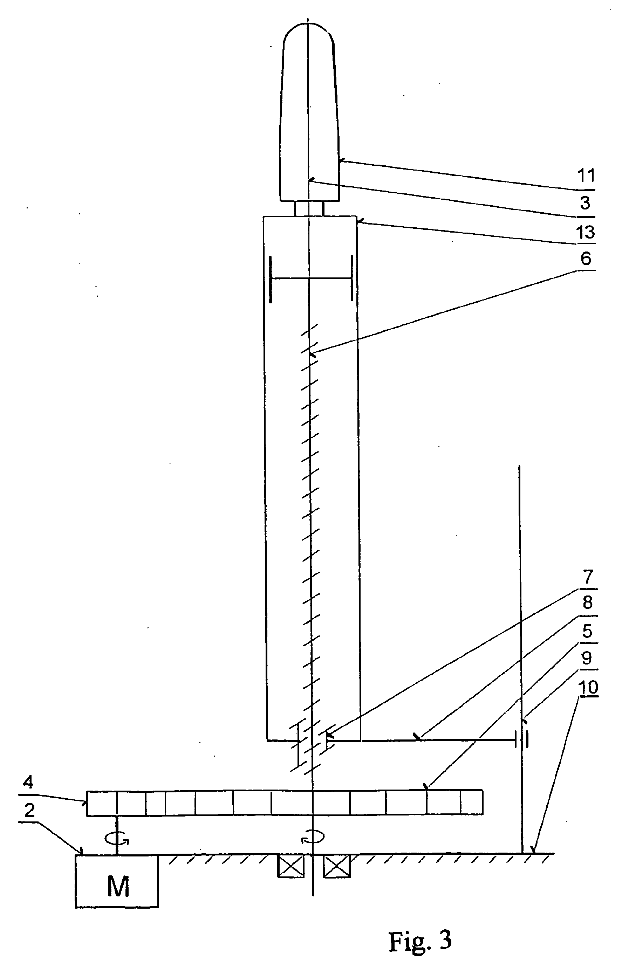

Fig. 1 zeigt den Servomechanismus **1** in der Draufsicht, wobei hier zwei unabhängige Servomechanismen **1** in einer Ausführung für zwei Pressstempel dargestellt sind. Jeder Servomechanismus **1** enthält einen elektrischen Motor **2**, welcher eine Antriebseinheit für einen Antrieb von zwei parallel nebeneinander angeordneten Pressstempeln, wobei in der Fig. 1 nur eine Achse **3** eines Pressstempels bezeichnet ist. Der Servomechanismus **1** enthält weiter ein eingelegtes Zahngetriebe zwischen einem Kleinrad **4** des elektrischen Motors **2** und einem angetriebenen Zahnrad **5** zum Antrieb einer drehbaren Führungsschraube **6**, welche in den Fig. 2 und 3 mit der Verbindung mit einer verschiebbaren Führungsmutter **7** besser dargestellt ist. Die verschiebbare Führungsmutter **7** ist mit einem Ende des Führungsarmes **8** fest verbunden, welcher mit seinem anderen Ende auf einer Stabführung **9** verschiebbar gelagert ist, welche parallel mit der Achse **3** des Pressstempels **11** angeordnet ist. Der ganze Servomechanismus **1**, d.h. zwei unabhängige Servomechanismen **1** in dieser Ausführung, ist in einem gemeinsamen Rahmen **10** angebracht.

Fig. 2 zeigt einen Schnitt durch den Servomechanismus **1** gemäß Schnittlinie A - A von Fig. 1, geführten durch die Achse eines verschiebbaren Pressstempels **11** und gleichzeitig durch die Stabführung **9** zum Auffangen der Reaktion der Kugelführungsmutter **7**, d.h. zur Verhinderung ihrer Rotation. In der Fig. 2 ist eine drehbare und nicht verschiebbare Kugelführungsschraube **6** und eine nicht drehbare und verschiebbare Kugelführungsmutter **7** dargestellt, welche mit dem verschiebbaren Pressstempel **11** fest verbunden ist, mit welchem sie koaxial angeordnet ist. Die Reibung bei dem Eingriff der Kugelführungsschraube **6** und der Kugelführungsmutter **7** ist durch eine rollende Reibung mittels der Kugeln **12** wesentlich reduziert, die in einem geschlossenen Kreis zwischen den Gewinden der Kugelführungsschraube **6** und der Kugelführungsmutter **7** angebracht sind. Wie es aus der Fig. 1 sichtbar ist, wird die rotierende Bewegung des elektrischen Motors **2** mittels eines eingelegten Zahngetriebes an die Kugelführungsschraube **6** überführt. Fig. 2 zeigt ein aus den wesentlichen Merkmalen des Gegenstandes der Erfindung, wo die Kugelführungsmutter **7** mit dem verschiebbaren Pressstempel **11** mittels eines verschiebbaren Schutzdeckels **13** fest verbunden ist, welcher herum ein Getriebe der Kugelführungsschraube **6** und der Kugelführungsmutter **7** in einer ganzen Hublänge der Kugelführungsmutter **7** angeordnet ist, wobei der Schutzdeckel **13** mit einer Möglichkeit einer gemeinsamen Verschiebung mit der Kugelführungsmutter **7** fest verbunden ist, bei einer axialen Verschiebung des verschiebbaren Pressstempels **11** zwischen seiner herausgezogenen Lage und seiner Arbeitslage, und zwar in die Richtung heraus der Vorform und herein die Vorform zur Herstellung des Vorpreßlings. Der Servomechanismus **1** ist hinsichtlich der Glasformmaschine so angeordnet, dass die Achse **3** des verschiebbaren Pressstempels **11** in einer vertikalen Lage ist und der Kopf des verschiebbaren Pressstempels **11** in die Richtung nach oben umgekehrt ist.

Weiter ist es hier noch ein weiteres Merkmal angezeigt, wo die Reaktion der Kugelführungsmutter **7** gegen die Drehung im Rahmen **10** mittels der Stabführung **9** aufgefangen ist, welche parallel mit der Achse **3** des Pressstempels **11** angeordnet ist. Der in der Fig. 2 dargestellte verschiebbare Schutzdeckel **13**, welcher gleichzeitig einen Träger des verschiebbaren Pressstempels **11** bildet, ist aus einer Hohlwelle gefertigt. Der verschiebbare Schutzdeckel **13** ist an einem seinen Ende in die Richtung zum Rahmen **10** des Servomechanismus **1** mit der verschiebbaren Kugelführungsmutter **7** fest verbunden ist, welche darin gelagert ist, und welche weiter mit einem Ende des Führungsarmes **8** fest verbunden ist, wobei der Führungsarm **8** mit seinem anderen Ende auf der Stabführung **9** verschiebbar gelagert ist, welche parallel mit der Achse **3** des verschiebbaren Pressstempels **11** angeordnet ist. An dem anderen Ende ist der verschiebbare Schutzdeckel **13** mit dem verschiebbaren Pressstempel **11** fest verbunden. Diese Anordnung nach der Fig. 2 ist in der Fig. 3 schematisch angezeigt, wo die Hauptteile des Servomechanismus **1** angezeigt sind, mit einer schematischen Darstellung der Übertragung der rotierenden Bewegung aus dem elektrischen Motor **2**, über das Kleinrad **4** und das angetriebene Zahnrad **5** an die in der festen Kugelführungsmutter **7** drehbar gelagerte Kugelführungsschraube **6**.

Die rotierende Bewegung des elektrischen Motors **2** wird durch das eingelegte Zahngetriebe, bestehend aus dem Kleinrad **4** und dem mit der Kugelführungsschraube **6** fest verbundenen angetriebenen Zahnrad **5**, an die Kugelführungsschraube **6** übertragen, wobei die Kugelführungsschraube **6** drehbar aber nicht verschiebbar ist. Durch dieses eingelegte Zahngetriebe ist es möglich das Drehmoment des elektrischen Motors und damit auch die Presskraft zu erhöhen. Durch eine mechanische Verbindung der drehbaren Kugelführungsschraube **6** und der nicht drehbaren Kugelführungsmutter **7** wird die drehbare Bewegung der Kugelführungsschraube **6** an die verschiebbare Bewegung der Kugelführungsmutter **7** übertragen, welche mit dem verschiebbaren Pressstempel **11** mittels des verschiebbaren Schutzdeckels **13** fest verbunden ist, welcher mit dieser Kugelführungsmutter **7** gemeinsam verschiebbar ist. Durch die Verschiebung der Kugelführungsmutter **7**, welche mit dem verschiebbaren Pressstempel **11** mittels des verschiebbaren Schutzdeckels **13** fest verbunden ist, entsteht es eine axiale Verschiebung des verschiebbaren Pressstempels **11** zwischen seiner ausgezogene Lage und seiner Arbeitslage, und zwar in die Richtung heraus der Vorform und herein die Vorform zur Herstellung des Vorpreßlings. Der mit der verschiebbaren Kugelführungsmutter **7** und mit dem verschiebbaren Pressstempel **11** verbundene und gleichzeitig den Träger des verschiebbaren Pressstempels **11** bildende Schutzdeckel **13** verschiebt sich in der ganzen Hublänge der Kugelführungsmutter **7** und des verschiebbaren Pressstempels **11** gleichzeitig mit der Kugelführungsmutter **7** und dem verschiebbaren Pressstempel **11** und deckt dauerhaft die Kugelführungsschraube **6** ab und schützt sie auf diese Weise vor einer Verunreinigung damit er eine dauerhafte Hinderung gegen eine Eindringung von Verunreinigungen in das Getriebe der Kugelführungsschraube **6** und der Kugelführungsmutter **7**.

Die Reaktion der Kugelführungsmutter **7** ist aufgefangen, d.h., dass ihre Rotation mittels des Führungsarmes **8** verhindert ist, welcher mit einem seinen Ende mit der verschiebbaren Kugelführungsmutter **7** fest verbunden ist und mit seinem anderen Ende auf einer Stabführung **9** verschiebbar gelagert ist, welche parallel mit der Achse **3** des verschiebbaren Pressstempels **11** angeordnet ist.

### Liste der Bezugszeichen

- 1: Servomechanismus
- 2: elektrischer Motor
- 3: Achse des Pressstempels
- 4: Kleinrad
- 5: angetriebenes Zahnrad
- 6: Kugelführungsschraube
- 7: Kugelführungsmutter
- 8: Führungsarm
- 9: Stabführung
- 10: gemeinsamer Rahmen
- 11: Pressstempel
- 12: Kugeln
- 13: Schutzdeckel

## Patentansprüche

1. Servomechanismus (1) zum Antrieb vom Pressstempel (11) einer Glasformmaschine, bestehend aus einem elektrischen Motor (2), einer Führungsschraube (6) und einer Führungsmutter (7) und in einem gemeinsamen Rahmen (10) angebracht, wo die rotierende Bewegung des elektrischen Motors (2) an die mechanische Verbindung der Führungsschraube (6) und der Führungsmutter (7) übertragen ist, welche die rotierende Bewegung an die lineare Bewegung zur Verschiebung des Pressstempels (11) in seiner vertikalen Achse (3) überführt, wobei für die Reduzierung der Reibung zwischen den Gewinden der Führungsschraube (6) und der Führungsmutter (7) diese Teile als eine Kugelführungsschraube (6) und als eine Kugelführungsmutter (7) gebildet sind, wobei die Kugelführungsschraube (6) drehbar und nicht verschiebbar ist und die Kugelführungsmutter (7) verschiebbar und nicht drehbar ist, wobei die Kugelführungsmutter (7) mit dem verschiebbaren Pressstempel (11) fest verbunden ist, mit welchem sie koaxial angeordnet ist, **dadurch gekennzeichnet, dass** die rotierende Bewegung des elektrischen Motors (2) an die in der Kugelführungsmutter (7) gelagerte Kugelführungsschraube (6) übertragen ist, wobei die Kugelführungsmutter (7) mit dem verschiebbaren Pressstempel (11) mittels eines verschiebbaren Schutzdeckels (13) fest verbunden ist, welcher herum ein Getriebe der Kugelführungsschraube (6) und der Kugelführungsmutter (7) in einer ganzen Hublänge der Kugelführungsmutter (7) angeordnet ist, wobei der Schutzdeckel (13) mit einer Möglichkeit einer gemeinsamen Verschiebung mit der Kugelführungsmutter (7) fest verbunden ist, wobei in einem gemeinsamen Rahmen (10) parallel mit der Achse (3) des Pressstempels (11) eine Stangenführung (9) zum Auffangen der Reaktion der Kugelführungsmutter (7) gegen die Rotation.

2. Servomechanismus nach Anspruch 1, **dadurch gekennzeichnet, dass** zwischen dem elektrischen Motor (2) und der Kugelführungsschraube (6) ein eingelegtes Zahngetriebe angeordnet ist, bestehend aus einem Kleinrad (4) des elektrischen Motors (2) und aus einem mit der Kugelführungsschraube (6) fest verbundenen angetriebenen Zahnrad (5), für eine Erhöhung des Drehmoments des elektrischen Motors (2) und für eine Erhöhung der Presskraft.

3. Servomechanismus nach Anspruch 1 und 2, **dadurch gekennzeichnet, dass** der verschiebbare Schutzdeckel (13), welcher gleichzeitig einen Träger des verschiebbaren Pressstempels (11) bildet, aus einer Hohlwelle gefertigt ist, wobei der verschiebbare Schutzdeckel (13) an einem seinen Ende in die Richtung zum gemeinsamen Rahmen (10) mit der verschiebbaren Kugelführungsmutter (7) fest verbunden ist, die darin gelagert ist, und an dem anderen Ende ist der verschiebbare Schutzdeckel (13) mit dem verschiebbaren Pressstempel (11) fest verbunden.

4. Servomechanismus nach einer der Ansprüche 1 bis 3, **dadurch gekennzeichnet, dass** die verschiebbare Kugelführungsmutter (7) weiter mit einem Ende des Führungsarmes (8) fest verbunden ist, welcher mit seinem anderen Ende auf einer Stabführung (9) verschiebbar gelagert ist, welche parallel mit der Achse (3) des verschiebbaren Pressstempels (11) .zum Auffangen der Reaktion der Kugelführungsmutter (7) gegen die Drehung angeordnet ist.

## Claims

1. A servo system (1) for driving a punch (11) of a glasswork machine, comprising an electric motor (2), a lead screw (6) and a screw lead nut (7) and situated in a common frame (10), wherein the rotational motion of the electric motor (2) is transferred to the mechanical coupling of the lead screw (6) and the screw lead nut (7), transmitting the rotational motion to the linear motion, for sliding of the punch (11) in its vertical axis (3), wherein said parts are created as a ball lead screw (6) and a ball screw lead nut (7) for a friction reducing between the screw threads and the nut threads, wherein the ball lead screw (6) is pivot able and nonsliding and the ball screw lead nut (7) is pivot not able and sliding and is joined fixedly with the sliding punch (11) and is coaxial with it,
**characterized in that** the rotational motion of the electric motor (2) is transferred to the ball lead screw (6), fitted in the ball lead screw nut (7), wherein the ball lead screw nut (7) is joined fixedly with the sliding punch (11) by means of a sliding protective cover (13), that is surrounding the gearing of the ball lead screw (6) and the ball lead screw nut (7) over the whole length of the travel of said ball lead screw nut (7), wherein the sliding protective cover (13) is joined fixedly with this lead screw nut (7) with a possibility of a common sliding with said nut (7), wherein a bar guide (9) is situated in the common frame (10) parallel with the axis (3) of the punch (11) for taking up a reaction of the lead screw nut (7) counter the rotation.

2. The servo system according to claim 1, **characterized in that** an intermediate gear drive is arranged between the electric motor (2) and the ball lead screw (6), comprising a pinion (4) of the electric motor (2) and a driven gear (5) joined fixedly with the ball lead screw (6), for an increasing of the torque of the electric motor (2) and for an increasing of the molding power.

3. The servo system according to claim 1 and 2, **characterized in that** the sliding protective cover (13), that creates a carrier of the sliding punch (11) at the same time, is made of a hollow shaft, wherein the sliding protective cover (13) at one of its ends in the direction to the common frame (10) is joined fixedly with the sliding ball lead screw nut (7), that is put in it, and at its other end is joined fixedly with the sliding punch (11).

4. The servo system according to claims 1 to 3, **characterized in that** the sliding ball lead screw nut (7) is further joined fixedly with one end of a leading arm (8), that is by its other end fitted slidingly on the bar guide (9), arranged parallel with the axis (3) of the sliding punch (11), for taking up a reaction of the lead screw nut (7) counter the rotation.

## Revendications

1. Servomécanisme (1) pour commande d'un poinçon-ébaucheur (11) d'une machine verriere, comportant un électromoteur (2), une vis-mère (6) et un écrou (7) de vis-mère et situé dans un cadre (10) commun, où le mouvement rotatif du électromoteur (2) est trasnfert au assemblage mécanique de la vis-mère (6) et de l'écrou (7) de vis-mère transmettant le mouvement rotatif au mouvement linéaire, pour déplacement du poinçon-ébaucheur (11) dans son axe vertical (3), et les dittes parts sont crées comme la vis-mère (6) et l'écrou (7) de vis-mère à billes pour reduction de la friction entre les filets de la vis-mère (6) et de l'écrou (7) de vis-mère, et la vis-mère (6) est pivotante et incoullissante et l'écrou (7) de vis-mère est inpivotant et coulissant et il est fixé à demeure avec le poinçon-ébaucheur (11) coulissant, avec lequel il est coaxial, **caractérisé en ce que** le mouvement rotatif de l'électromoteur (2) est trasfert à la vis-mère (6) à billes, logée dans l' ecrou (7) de vis-mère, et l' ecrou (7) de vis-mère à billes est fixé à demeure avec le poinçon-ébaucheur (11) coulissant à l'aide d'un couvercle de protection coulissant (13) qui est arrangé autour de la transmission de la vis-mère (6) et de l' ecrou (7) de vis-mère dans la longueur entière de la course de l' écrou (7) de vis-mère, et le couvercle de protection coulissant (13) est fixé à demeure avec cet écrou (7) avec la possibilité de déplacement commun avec cet écrou (7), et dans le cadre (10) commun il y a situé un guidage (9) à la barre parallélement avec l'axe (3) du poinçon-ébaucheur (11), pour capture de la réaction d'écrou (7) contre la rotation.

2. Servomécanisme (1) selon la revendication 1, **caractérisé en ce que** entre de 1' électromoteur (2) et de la vis-mère (6) à billes il y a arrangée une transmission par engrenage intermédiaire comportant un pignon (4) de 1' électromoteur (2) et une roue dentée menée (5), fixé à demeure avec la vis-mère (6) pour augmenter le moment de torsion de l'électromoteur (2) et pour augmenter la puissance de pressage.

3. Servomécanisme (1) selon l'une des la revendications 1 ou 2, **caractérisé en ce que** le couvercle de protection coulissant (13), qui forme en même temps un support du poinçon-ébaucheur (11) coulissant, est creé d'un arbre creux, et dans l'une de sa fin à la direction au cadre (10) commun le couvercle de protection coulissant (13) est fixé à demeure avec l'écrou de vis-mère coulissant (7), qui est en insert, et dans l'autre de sa fin le couvercle de protection coulissant (13) est fixé à demeure avec le poinçon-ébaucheur (11) coulissant.

4. Servomécanisme (1) selon l'une des la revendications 1 à 3, **caractérisé en ce que** l'écrou de vis-mère coulissant (7) est en outre fixé à demeure avec une fin de bras de guidage (8), qui est par sa l'autre fin logé glissant sur le guidage (9) à la barre, arrangé parallélement avec l'axe (3) du poinçon-ébaucheur (11), pour capture de la réaction d'écrou (7) contre la rotation.
